# EUROPEAN PATENT SPECIFICATION

(11) **EP 2 130 013 B1**
(45) Date of publication and mention of the grant of the patent: **15.05.2019**
(21) Application number: 08725875.2
(22) Date of filing: 21.02.2008
(51) Int. Cl.: G01J 3/46, G01J 3/50

(54) **AUTOMATIC SELECTION OF COLORANTS AND FLAKES FOR MATCHING COATING COLOR AND APPEARANCE**
AUTOMATISCHE AUSWAHL VON FÄRBEMITTELN UND -FLOCKEN ZUR ANGLEICHUNG VON BESCHICHTUNGSFARBEN AN EINE ÄUSSERE ERSCHEINUNG
SÉLECTION AUTOMATIQUE DE COLORANTS ET FLOCONS POUR ADAPTER LA COULEUR ET L'ASPECT D'UN REVÊTEMENT

(30) Priority: 21.02.2007 US 902761 P
(43) Date of publication of application: 09.12.2009
(73) Proprietor: Coatings Foreign IP Co. LLC, Wilmington, DE 19801 (US)
(72) Inventor: PRAKASH, Arun, West Chester, Pennsylvania 19382 (US); OBETZ, Judith, Elaine, Newtown Square, Pennsylvania 19073 (US)
(74) Representative: LKGLOBAL Lorenz & Kopf PartG mbB Patentanwälte
(86) International application number: PCT/US2008/002283
(87) International publication number: WO 2008/103405

(56) References cited:
- US-A1- 2001 036 309
- US-A1- 2006 181 707
- US-A1- 2006 181 707
- US-B2- 6 952 265
- US-B2- 6 952 265

## Description

### FIELD OF INVENTION

The present invention is directed to a method and a system for producing one or more matching formulas to match color and appearance of a target coating containing flakes.

### BACKGROUND OF INVENTION

Surface coatings containing effect pigments, such as light absorbing pigment, light scattering pigments, light interference pigments, and light reflecting pigments are well known. Flakes, such as metallic flakes, for example aluminum flakes, are examples of such effect pigments and are especially favored for the protection and decoration of automobile bodies, such as for example by reason of their imparting a differential light reflection effect, usually referred, to as "flop", as well as flake appearance effects, which include flake size distribution and the sparkle imparted by the flake as well as the enhancement of depth perception in the coating. The flake containing coatings usually also contain other pigments or colorants, generally of a light absorbing rather than a light scattering type. These light absorbing pigments interact with effect pigments such as flakes to change the appearance effect of the coating. In general, visual coating appearance includes texture, sparkle, glitter or other visual effects of a coating. The visual appearance can vary when viewed from varying viewing angles, with varying illumination angles, or with varying illumination intensities.

For repairing a previously coated substrate, for example, of an automotive body, it is necessary to choose the correct colorants or colorant combinations to match the color of that coated substrate as well as the correct effect pigments such as flakes to match the color and appearance of that coated substrate. Developments have been made to select colorants based on color measurement of a target coating. US 2006/0181707 A1 describes a computer implemented method to select colorants or colorant combinations to match the color of a coating on a coated auto body. Selection of effect pigments, such as flakes, however, is traditionally done manually by an experienced shader, based on their expertise. Once the flakes have been selected, the flakes are added into a formulation algorithm producing one or more preliminary matching formulas. One or more test coatings are then prepared based on the preliminary matching formulas and sprayed on test panels, which are then visually compared to the target coating. If the appearance such as flop and/or sparkle match are deemed unsatisfactory, the shader adjusts the type and/or changes the amount of the flakes entered into the algorithm to get new color/flop matching formulas and the whole cycle is repeated until an adequate match is achieved in both color and appearance at all angles of illumination and view. This traditional approach, however, requires repeated spraying and visually comparing test panels with the target coating.

US 2001/036309 A1 describes a computer color-matching apparatus and paint color-matching method using the apparatus.

A need exists, therefore, for a method for automatic selection of colorants and effect pigments such as flakes to produce one or more matching formulas wherein match coatings resulted from said matching formulas closely match both the color and appearance of the target coating.

### STATEMENT OF INVENTION

The invention is defined by the appended claims.

### BRIEF DESCRIPTION OF DRAWING

**Figure 1** is a flow chart for a traditional method for producing matching formulas to match the color and appearance of a target coating.
**Figure 2** is a first representative flow chart of the method of this invention.
**Figure 3** is a second representative flow chart of the method of this invention.
**Figure 4** is a schematic representation of bright features detectable above a first threshold level T1.
**Figure 5** is a schematic representation of bright and intermediate features detectable above a second threshold level T2.
**Figure 6** is a schematic representation of features detectable above a third threshold level T3. The crosshatched area represents dark features having image intensity below the threshold levels T3. Dotted lines represent boundaries of features detectable above T1 or T2 threshold levels.

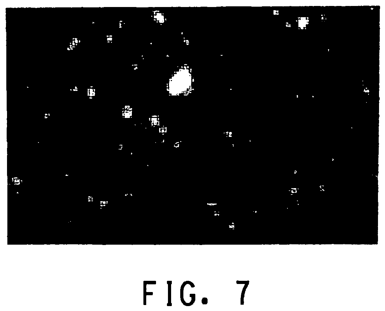

**Figure 7** is a representative coating image in gray scale.
**Figure 8** shows the coating image of **Figure 7** at three different threshold levels. **A:** image showing bright features of different sizes above threshold level T1; **B:** same image above the threshold level T2; and **C:** same image at the threshold level T3.
**Figure 9** shows representations of coating regions having detectable features at different threshold levels.

### DETAILED DESCRIPTION OF PREFERRED EMBODIMENT

The aspects and advantages of the present invention will be more readily understood, by those of ordinary skill in the art, from reading the following detailed description. It is to be appreciated that certain aspects of the invention, which are, for clarity, described above and below in the context of separate embodiments, may also be provided in combination in a single embodiment. Conversely, various aspects of the invention that are, for brevity, described in the context of a single embodiment, may also be provided separately or in any sub-combination. In addition, references in the singular may also include the plural (for example, "a" and "an" may refer to one, or one or more) unless the context specifically states otherwise.

The use of numerical values in the various ranges specified in this application, unless expressly indicated otherwise, are stated as approximations as though the minimum and maximum values within the stated ranges were both proceeded by the word "about." In this manner, slight variations above and below the stated ranges can be used to achieve substantially the same results as values within the ranges. Also, the disclosure of these ranges is intended as a continuous range including every value between the minimum and maximum values.

As used herein:
The term "pigment" or "pigments" used herein refers to a colorant or colorants that produce color or colors. A pigment can be from natural and synthetic sources and made of organic or inorganic constituents. A pigment also includes metallic particles or flakes with specific or mixed shapes and dimensions. A pigment is usually not soluble in a coating composition.

The term "effect pigment" or "effect pigments" refers to pigments that produce special effects in a coating. Examples of effect pigments include, but not limited to, light scattering pigments, light interference pigments, and light reflecting pigments. Flakes, such as metallic flakes, for example aluminum flakes, are examples of such effect pigments.

Gonioapparent flakes refer to flakes which change color or appearance, or a combination thereof, with change in illumination angle or viewing angle. Metallic flakes, such as aluminum flakes are examples of gonioapparent flakes.

The term "dye" means a colorant or colorants that produce color or colors. Dye is usually soluble in a coating composition.

"Appearance" used herein refers to (1) the aspect of visual experience by which a coating is viewed or recognized; and (2) perception in which the spectral and geometric aspects of a coating is integrated with its illuminating and viewing environment. In general, appearance includes texture, sparkle, or other visual effects of a coating, especially when viewed from varying viewing angles and/or with varying illumination angles.

The term "database" refers to a collection of related information that can be searched and retrieved. The database can be a searchable electronic numerical, alphanumerical or textual document; a searchable PDF document; a Microsoft Excel® spreadsheet; a Microsoft Access® database (both supplied by Microsoft Corporation of Redmond, Washington); an Oracle® database (supplied by Oracle Corporation of Redwood Shores, California); or a Linux database, each registered under their respective trademarks. The database can be a set of electronic documents, photographs, images, diagrams, or drawings, residing in a computer readable storage media that can be searched and retrieved. A database can be a single database or a set of related databases or a group of unrelated databases. "Related database" means that there is at least one common information element in the related databases that can be used to relate such databases. One example of the related databases can be Oracle® relational databases.

The term "vehicle", "automotive", "automobile", "automotive vehicle", or "automobile vehicle" refers to an automobile such as car, van, mini van, bus, SUV (sports utility vehicle); truck; semi truck; tractor; motorcycle; trailer; ATV (all terrain vehicle); pickup truck; heavy duty mover, such as, bulldozer, mobile crane and earth mover; airplanes; boats; ships; and other modes of transport that are coated with coating compositions.

A computing device used herein refers to a desktop computer, a laptop computer, a pocket PC, a personal digital assistant (PDA), a handheld electronic processing device, a smart phone that combines the functionality of a PDA and a mobile phone, or any other electronic devices that can process information automatically. A computing device may have a wired or wireless connection to a database or to another computing device. A computing device may be a client computer that communicates with a host computer in a multi-computer client-host system connected via a wired or wireless network including intranet and internet. A computing device can also be configured to be coupled with a data input or output device via wired or wireless connections. For example, a laptop computer can be operatively configured to receive color data and images through a wireless connection. A computing device may further be a subunit of another device. Examples of such a subunit can be a processing chip in an imaging device, a spectrophotometer, or a goniospectrophotometer. A computing device may be connected to a display device, such as a monitor screen. However, the display device is not necessary. A "portable computing device" includes a laptop computer, a pocket PC, a personal digital assistant (PDA), a handheld electronic processing device, a mobile phone, a smart phone that combines the functionality of a PDA and a mobile phone, a tablet computer, or any other stand alone or subunit devices that can process information and data and can be carried by a person.

Wired connections include hardware couplings, splitters, connectors, cables or wires. Wireless connections and devices include, but not limited to, Wi-Fi device, Bluetooth device, wide area network (WAN) wireless device, Wi-Max device, local area network (LAN) device, 3G broadband device, infrared communication device, optical data transfer device, radio transmitter and optionally receiver, wireless phone, wireless phone adaptor card, or any other devices that can transmit signals in a wide range of electromagnetic wavelengths including radio frequency, microwave frequency, visible or invisible wavelengths.

An imaging device refers to a device that can capture images under a wide range of electromagnetic wavelengths including visible or invisible wavelengths. Examples of the imaging device include, but not limited to, a still film optical camera, a digital camera, an X-Ray camera, an infrared camera, an analog video camera, and a digital video camera. A digital imager or digital imaging device refers to an imaging device captures images in digital signals. Examples of the digital imager include, but not limited to, a digital still camera, a digital video camera, a digital scanner, and a charge coupled device (CCD) camera. An imaging device can capture images in black and white, gray scale, or various color levels. A digital imager is preferred in this invention. Images captured using a non-digital imaging device, such as a still photograph, can be converted into digital images using a digital scanner and can be also suitable for this invention. The imaging device can further comprise an illumination device.

An illumination device for providing illuminations typically includes a light source, such as, the IT3900 with a tungsten-halogen lamp EKE supplied by Illumination Technologies Inc., East Syracuse, New York and a fiber optic bundle A08025.60 supplied by Schott Fostec Inc., Auburn, New York that is capable of producing beams of illumination in the visible light range of from 400 nanometers to 700 nanometers at set intensities. The system, which is preferably portable, is preferably provided with an enclosed extension to house the light source. Other illumination devices, such as the MHF-C50LR light source with an LM-50 lamp and a fiber optic bundle connected to a MML4-45D micro machine lens system, supplied by Moritex USA Inc., San Jose, California to pipe-in the illumination beams from the light source, are also suitable. The means for selecting an effective illumination intensity can be any conventional means, such as a voltage regulator that can change the current to the filament of the light source. The illumination intensity can be controlled in accordance with a conventional software program run from a computer to achieve the preset intensities. The computer used here to control the illumination intensity can be the same aforementioned computing device for receiving the image or a separate computer. Any suitable computer can be used, such as, for example, Dell Precision M50 model supplied by Dell Computer Corp., Round Rock, Texas. If desired, the system may comprise additional means such as a collimating lens or an aperture, for collimating the one or more beams of light emanating from light source as determined necessary by those skilled in the art. The illumination device may further provide modulations of illumination angles. The illumination device can also be part of the imaging device.

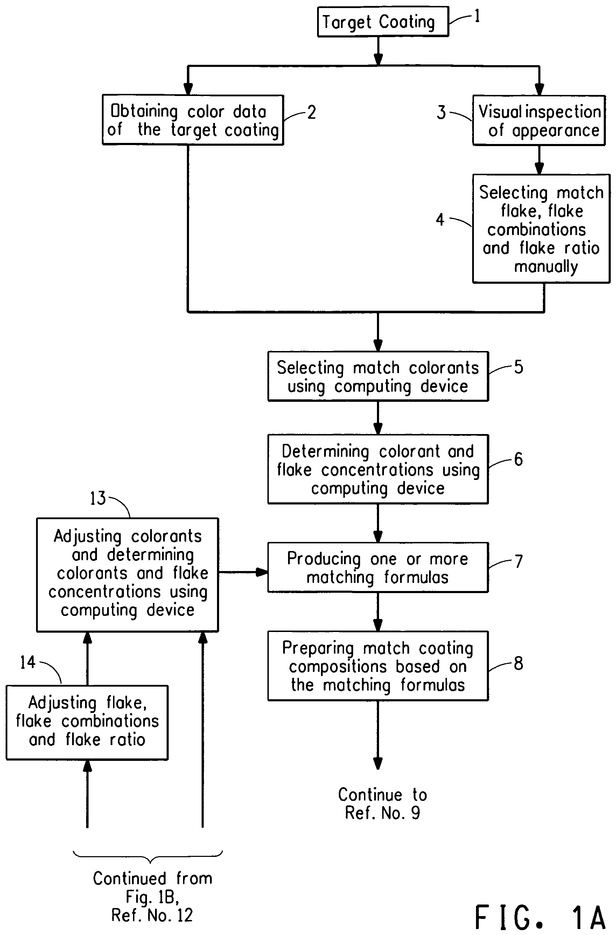

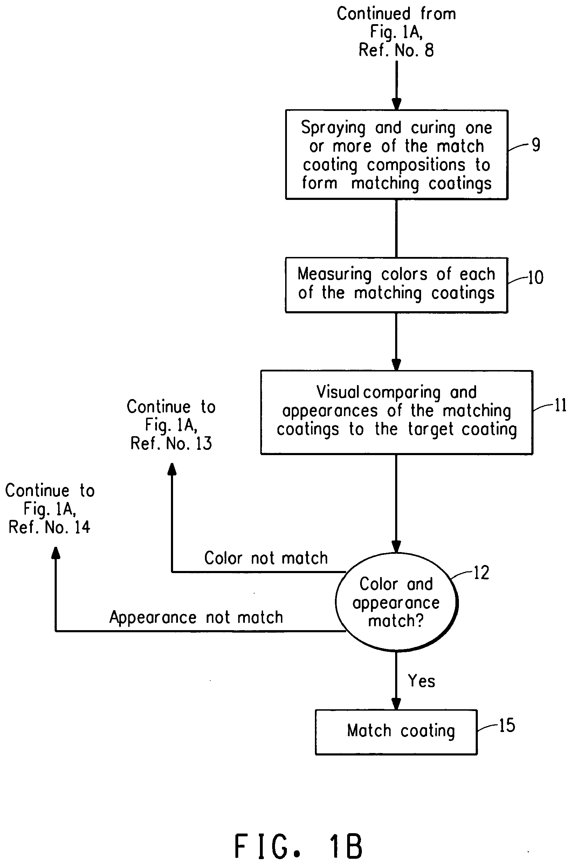

**Figure 1** outlines a typical traditional workflow for matching color and appearance of a target coating **1.** To match color, color data of the target coating are obtained in the step **2.** Color data can be obtained as reflectance data, L*,a*,b* or L,C,h values, or spectral data provided by a color measuring device such as a spectrophotometer. Color data can also be obtained by importing into the computing device from digital data files containing required color data. In this typical traditional process, appearance data of the target coating is obtained by visual inspection (step **3**) of the target coating and appearance match is done manually by one or more experienced shaders, based on their expertise to identify the presence or absence of any effect pigments such as flakes, wherein said target coating can be a previously coated substrate of an automotive body. If one or more effect pigments such as flakes are present in the target coating, the shaders manually select, in step **4,** one or more flakes, flake combinations, or flake ratios from a set of known flakes that may potentially match appearance of the target coating.

Color match can be done automatically based on color data using a computing device and well developed color matching algorithms operatively residing in the computing device. One example of such color matching algorithm is described in detail in aforementioned US 2006/0181707 A1. Since the presence of flakes affects colorants selection, the color data and the selected flakes, flake combinations or flake ratios are entered into the color matching algorithm in step **5** to select match colorants. Concentrations of each of the colorants and flakes are determined in step **6** by the algorithm. One or more matching formulas are then produced in step **7** based on the concentrations of the colorants and the flakes. If necessary, concentrations of the colorants and the flakes are balanced to allow for the presence of non-colorant and non-flake components. Examples of non-colorant or non-flake components include, but not limited to, binder polymers, solvents, additives such as UV screeners, light stabilizers, rheology control agents, flow agents, adhesion promoters, catalysts, and other materials determined necessary for the coating by those who are skilled in the art. Some or all of the non-colorant or non-flake components can also be pre-balanced with all necessary materials determined by those who are skilled in the art. Preliminary matching coating compositions are then prepared in step **8** based on the matching formulas and sprayed on test panels to form preliminary match coatings in step **9.** The color of each of the preliminary match coatings is typically measured using an aforementioned color measuring device in step **10.** The color and appearance of those preliminary match coatings are then visually compared to the target coating in step **11.** If the color match is deemed not satisfactory (**12**), the shader adjusts colorants and new colorant and flake concentrations are computed in step **13.** The color measurement data of the preliminary match coatings obtained in step **10** can be used to assist the adjustment of colorants. New matching formulas are then produced (step **7**) and the whole cycle is repeated. If the appearance such as flop and/or sparkle match are deemed unsatisfactory, the shader adjusts the type and/or changes the amount of the flakes in step **14** and enters the new flake selection into the algorithm to calculate new colorants and flake concentrations in step **13.** A set of new matching formulas are then produced and the steps of **7** through **12** are repeated until one or more match coatings having adequate match in both color and appearance (**15**) are obtained. It is acceptable in the industry that color and appearance may be achieved at all or some predetermined angles of illumination or view. This traditional approach, however, requires repeated spraying and visually comparing test panels with the target coating.

An example is directed to a method for automatic selection of match flakes for producing one or more matching formulas for matching both color and appearance of a target coating containing flakes. This example improves the typical traditional workflow reducing the need for repeated spraying and visually comparing the test panels.

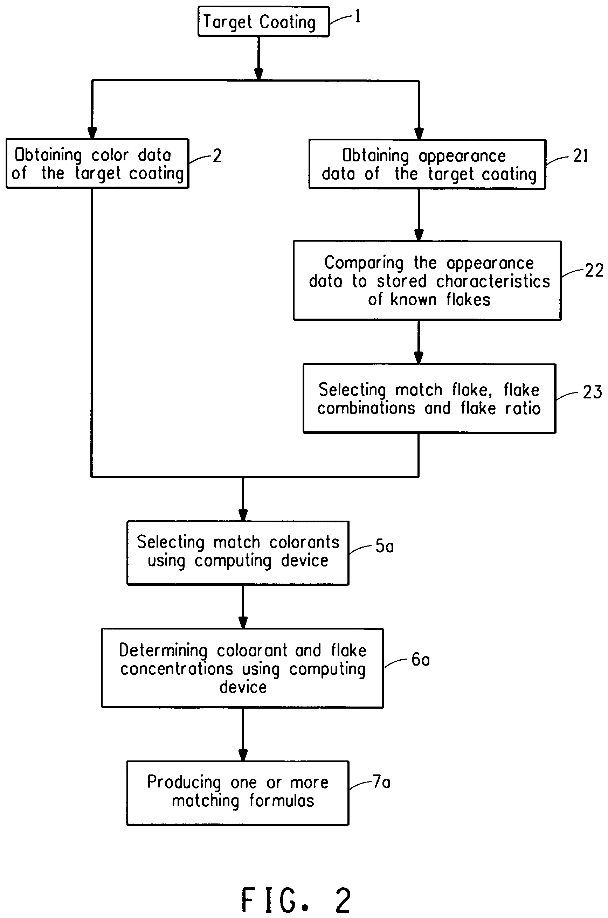

**Figure 2** outlines a first representative flow chart of this invention. Color data of the target coating can be obtained in step **2** in the same way as the aforementioned traditional process. In this embodiment of the invention, appearance data can be obtained in step **21** using an appearance measurement device. The appearance data are then compared with stored appearance characteristics of known flakes in step **22** in a flake database. One or more known flakes, flake combinations or flake ratios are automatically selected in step **23** so that the appearance characteristics of the selected flakes, flake combinations or flake ratios match the appearance data. The selected flakes, flake combinations or flake ratios are then entered into the color matching algorithm to select match colorants in step **5a.** Concentrations of each of the colorants and flakes are determined by the algorithm in step **6a.** One or more matching formulas are then produced in step **7a** based on the concentrations of the colorants and the flakes. If necessary, concentrations of the colorants and the flakes can be balanced to compensate for the presence of non-colorant and non-flake components. If desired, preliminary matching coating compositions can be prepared based on the matching formulas and test sprayed to form match coatings and compared according to steps **8 - 15** shown in **Figure 1****.** Steps **21** - **23** in **Figure 2** ensure that accurate appearance data are obtained without the need for visual inspection by one or more experienced shaders based on their expertise. In addition, the appearance data are compared with stored appearance characteristics of known flakes in a flake database resulting in better appearance match. With this invention, fewer matching formulas are produced and fewer test sprays are needed resulting in improved productivity and shortened time needed for obtaining acceptable match coatings.

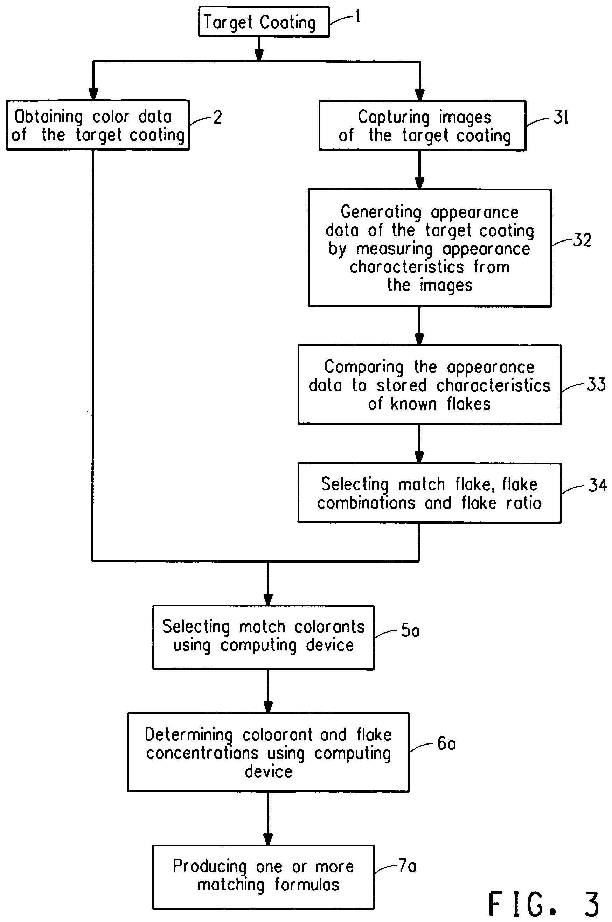

In a second representative flow chart of this invention outlined in **Figure 3****,** the appearance data can be obtained by capturing one or more target images using an imaging device and subsequent measurement of the target images using a computing device. The target images can be still images or video images. Both still images and video images are suitable for this invention. The target images, either still or video images can be stored in digital formats for measurement of appearance characteristics at the same time or at a different time. The target images can also be captured and transmitted to a computing device for measurement of appearance without being stored permanently, such as real-time video images without being stored. In this invention, stored images are preferred. The appearance data can also be generated by an appearance measurement device and stored as non-image electronic files. Examples of such non-image electronic files include, but not limited to, numerical, textual or alphanumerical data files correlating positions and appearance data at each of the positions. Image and non-image data files can be converted to each other according to well known methods. For example, an image can be measured using methods described below and stored into a separate non-image data file.

In one embodiment, appearance data of a target coating containing flakes can be obtained as described below.

Illuminations at a fixed illumination angle and at varying illumination intensities are directed to the target coating. The fixed illumination angle can be at a perpendicular (0°), also known as normal (0°) angle to the surface of the target coating, or an angle within the range from -5° to +5° from the normal. Image capture is also at the normal angle. Illumination intensity is in such a range that within the captured image, sparkles caused by the flakes are brighter than other target coating areas where no flakes are visible. The flakes in the target coating exhibit varying brightness or sparkles under varying illumination intensities.

Then, an illumination intensity setting is selected so that the brightest parts of the image are at or close to a maximum image intensity level while at the same time objects at lower image intensities are still visible in the image. The selected illumination intensity is referred to as an effective illumination intensity. A commonly used imaging device stores digital images with image intensity levels ranging from 0 to 255 wherein 0 represents the darkest and 255 represents brightest parts of an image. When such commonly used imaging device is used, the maximum image intensity level is 255. This range comes from the 8 bits data format used to represent the data of any one pixel in the digital image. When other data formats are used, image intensity levels may change. Those skilled in the art can select any workable data formats, image intensities and illumination intensities.

At least one image of the target coating under the effective illumination intensity is captured using the aforementioned imaging device. An imaging device refers to a device that can capture images under a wide range of electromagnetic wavelengths including visible or invisible wavelengths. Preferred imaging device is a digital still camera, a digital video camera, a digital scanner, or a charge coupled device (CCD) camera. An imaging device can capture images in black and white, gray scale, or various color levels.

The image captured by the imaging device can be stored in one of the commonly used digital image file formats, such as, but not limited to ".bmp" (Windows Bitmap), ".tif" or ".tiff" (Tagged Image File Format), ".jpg" or ".jpeg" (Joint Photographic Experts Group image file format), ".gif" (Graphics Interchange Format), or ".wmf" (Windows Metafile format). The images can also be captured in analog format and converted into digital format by methods well known to those skilled in the art. The images can also be analog or digital video images. The images can be entered into a computing device through a wired or wireless connection.

The image is then measured by the computing device to identify appearance features. An appearance feature is a characteristic or attribute that contributes to the visual appearance of a coating. An appearance feature can be identified and localized as a sparkle object, a flake or a flake-like object, a physical distance between two adjacent objects, a region where one or more objects reside, a region having multiple objects, or a combination thereof. A feature can also be a characteristic or attribute such as distribution of intensities, variation of intensities, or other statistical descriptions of the coating appearance. Appearance features can be quantitative or qualitative descriptions of the appearance of the coating. Quantitative descriptions, such as size, brightness, or other descriptions with numeric values are preferred. In one example, appearance features can comprise a set of bright features from bright areas of said image where the effect pigments such as metallic flakes exhibit highest brightness, a set of intermediate features from intermediate areas of the image where the effect pigments exhibit intermediate brightness, and a set of dark features from dark areas of the image where the target coating is essentially free of detectable said effect pigments.

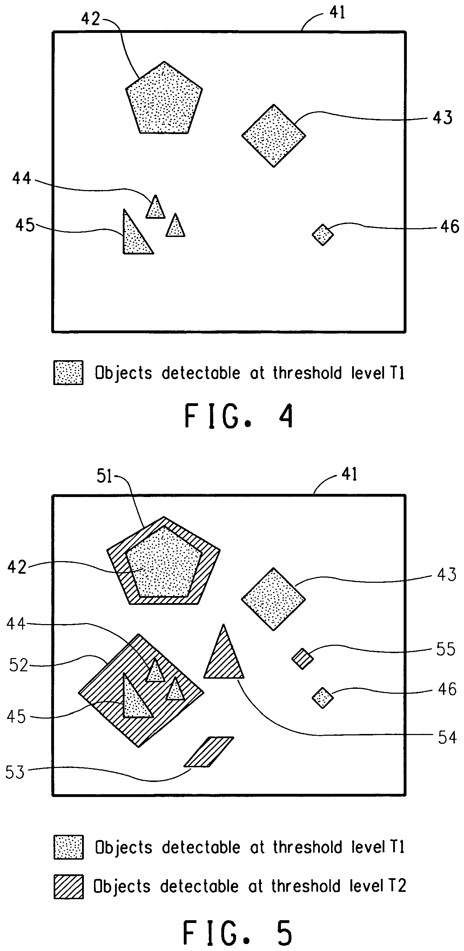

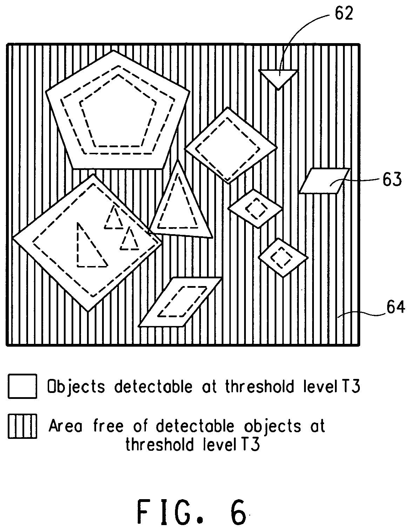

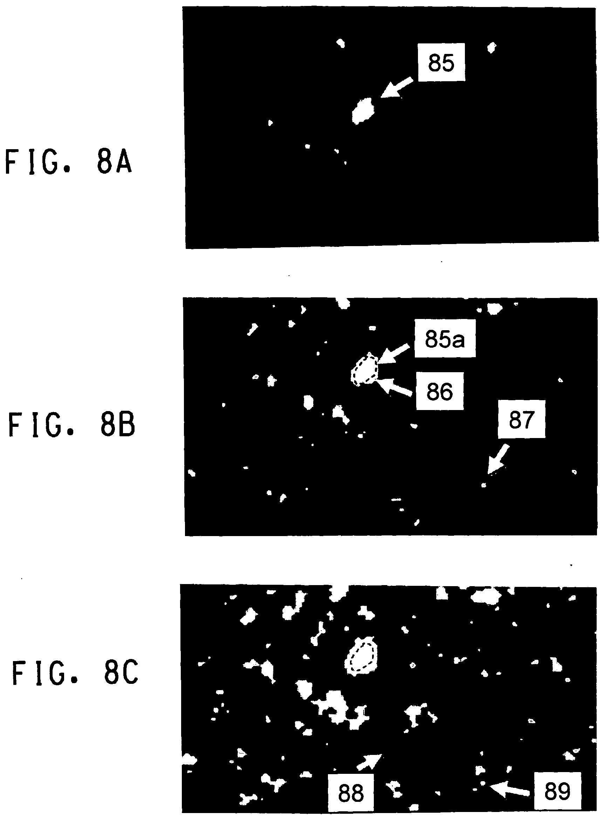

Measurement can be done by setting different threshold levels wherein a threshold level used herein refers to an image intensity level where any pixels having the image intensity level equal or greater than the threshold level will be measured. For example, a threshold level T1 of 225 can be set for bright areas meaning that pixels or regions of pixels of the image having image intensity equal or greater than 225 will be identified as bright features, such as objects **42** - **46** in the area **41** of **Figure 4** or object **85** in **Figure 8A****.** A second threshold level T2 can be set at 150 for intermediate brightness. Objects having image intensity equal or greater than 150 can be identified as intermediate features, such as objects **51** - **55** in **Figure 5** or objects **86** and **87** in **Figure 8B****.** A threshold level T3 of 100 can be set for dark features meaning that pixels or regions of pixels of the image having image intensity below 100 will be identified as dark features, such as area **64** in **Figure 6** or area **88** in **Figure 8C** where essentially no flakes or flake-like objects are detectable. Some other objects, such as objects **62** and **63** in **Figure 6** or object **89** in **Figure 8C** that have image intensities below the threshold level T2, but above T3 can be identified and considered when generating dark feature values.

Individual feature values are generated for individual appearance features identified as described above. A number of feature values can be generated based on features identified. Examples of feature values include: (1) Total number of distinct and contiguous sparkle objects having image intensity equal or greater than a set first threshold level T1; (2) Average number of small sparkle objects measured in each of the images; (3) Average number of medium sparkle objects measured in each of the images; (4) Average number of large sparkle objects measured in each of the images; (5) Average number of extra large sparkle objects measured in each of the images; (6) Fractional area of each image having image intensities above the set first threshold level (Area T1); (7) The number of sparkle objects where the size of the sparkle object is expanded at a second Threshold Level T2, such as objects **51** and **52** in **Figure 5**; (8) Average number of new sparkle objects wherein a new sparkle object is a contiguous area that is distinct at the second Threshold Level T2, such as objects **53, 54** and **55** in **Figure 5**; (9) Fractional area of each image having image intensities greater than the second threshold level T2; (10) Fractional area of each image having sparkle objects expanded at the second Threshold Level T2 comparing to that at the first Threshold Level T1 (Area Exp); (11) Fractional area of each image having new sparkle objects at the second Threshold Level T2 (Area New); and (12) Fractional area of each image having image intensities below a third threshold level T3, such as the area **64** in **Figure 6**. Additional features can be identified and additional feature values can be generated as determined necessary by those skilled in the art. Examples of such additional features include objects **62** and **63** in **Figure 6** that have image intensity between T2 and T3.

Appearance characteristics can be generated based on the individual feature values generated. Examples of such appearance characteristics include such ratios of Area Exp/Area T1 and Area New/Area T1. These ratios are related to physical properties of flakes in the coating and contribute to the appearance of the target coating. Other appearance characteristics may be generated as determined necessary by those skilled in the art.

In a second embodiment, appearance data of a target coating containing flakes can be obtained with a process described in detail in US 6,952,265, said process is briefly described below. First, one or more beams of illumination at a preset intensity is directed towards the target coating. The beams can be directed at a perpendicular (0°), also known as normal (0°) angle to the surface of target coating, or an angle within the range from -5° to +5° from the normal. Preferably, one or more beams of illumination are directed sequentially at plurality of preset intensities, preferably at at least two, and more preferably at least three preset intensities. Then, a reflection of the target coating is directed to an imaging device to capture a target image in color or preferably in gray scale, of the target coating. Preferably, one or more reflections of the target coating are directed sequentially at plurality of other preset intensities to the imaging device.

The target images captured can be transmitted to a computing device, such as a computer, or a portable computer. Appearance data of the target coating can be generated by the computing device by measuring appearance characteristics from the images. One measurement suitable for generating said appearance data is described in aforementioned US 6,952,265 with the following steps:
(a) scanning the target images at first of the preset intensities and at first of threshold levels;
(b) locating regions of pixels recognizable above the first threshold level in the target images at the first of the preset intensities;
(c) scanning the target images at the first of the preset intensities and at subsequent said threshold levels;
(d) locating new regions of pixels recognizable above the subsequent threshold levels in the target images at the first of preset intensities;
(e) locating coincident regions of pixels recognizable above the subsequent threshold level that incorporate the regions of pixels recognizable above the first threshold level located in said step (b);
(f) adding number of the new and coincident regions of pixels of preset sizes located in said steps (d) and (e) to record a final number of the preset sizes of regions of pixels recognizable above the threshold levels at the first of preset intensities. A feature in this embodiment can be a characteristic or attribute, such as a flake or a flake-like object visible at one or more threshold levels, a physical distance between two adjacent objects, or a region having multiple objects. The final number of the preset sizes of regions is referred to as a feature value; and
(g) repeating said steps (a), (b), (c), (d), (e), and (f) at subsequent preset intensities.

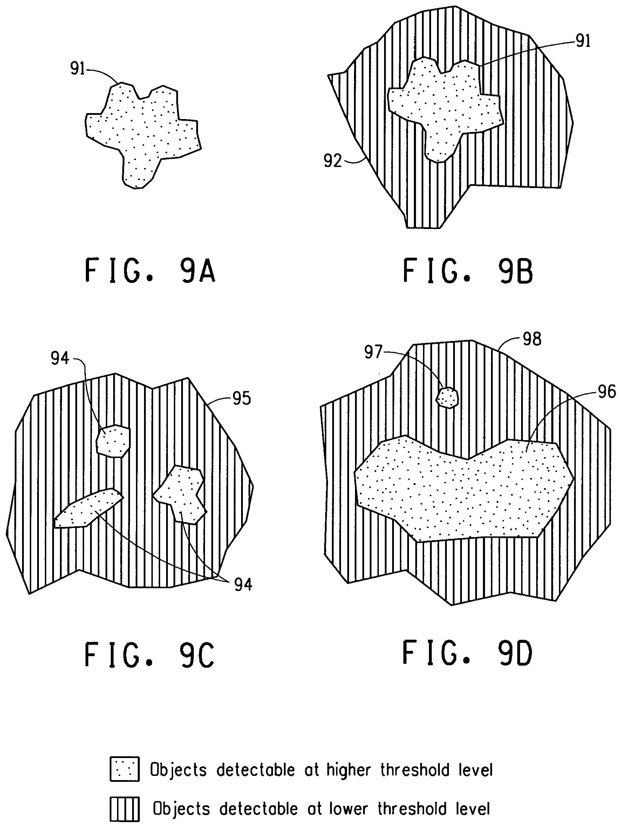

In the foregoing steps (a) through (g), several decisions can be made on the basis of preset criteria. One example is shown in **Figure 9****.** In step (a), when the target image at first of the preset intensities and at first of threshold levels is scanned, i.e., at the highest threshold level, only regions of pixels representing flakes having most prominent visible features would be located. The location and size, in accordance with the preset criteria of sizes, such a region is recorded as a new flake **(91)** shown in **Figure 9A****.** When the same target image is scanned in step (c) at a lower threshold level, it is possible that new regions of pixels could become recognizable above the lower threshold level in the target image at the first of preset intensities. Thus, a previously located region recorded as new flake **(91)** may appear larger once its additional features **(92)** are located at the lower threshold level **(****Figure 9B****).** The foregoing coincident regions include single contiguous regions of pixels recognizable above the first threshold level that are enveloped within single regions of pixels recognizable above said lower threshold level. Under such a scenario the previously located and recorded size of the flake is discarded and the new larger size is recorded in its place.

Alternatively, the foregoing coincident regions can also include plurality of regions of pixels recognizable above the first threshold level that are merged within regions of pixels recognizable above the lower threshold level. Thus, a cluster of small regions **(94),** which were previously located and recorded as new flakes of small size, when analyzed at a lower threshold level can be part of a larger flake **(95) (****Figure 9C****).** Under such a scenario, the previously located and recorded size of these small regions is discarded and a new larger region is located and recorded in their place.

In yet another scenario, at the first threshold level, a large region **(96)** could be located adjacent to a small region **(97),** both of which would be located and recorded. However, the same combination, when viewed at a lower threshold level can become part of a new larger region **(98) (****Figure 9D****).** Under such a scenario, the previously located and recorded sizes of these large **(96)** and small **(97)** regions are kept and the new larger region **(98)** is discarded, since the new larger region is likely to be a result of multiple flakes appearing as one merged flake, which should not, therefore, be counted as one large flake but should be counted as two distinct regions, namely the large region **(96)** and the small region **(97).** In addition to the foregoing, it is possible that a region not recorded at all at the first threshold (the highest threshold) could appear at the lower threshold, which would also be located and recoded at that threshold level. Moreover, it would be apparent that any regions having no changes to their size even at lower threshold levels would be also located and recorded without change. The same process is repeated at other preset intensities.

By locating and recording the number of flakes from the target images at different thresholds and multiple illumination levels, said measurement method generates appearance data including a plurality of target features and corresponding target feature values that reflect sizes of the flakes in the target coating at pre-set illumination intensities. Although a target coating having flakes as effect pigments are specifically described, the above mentioned method is also suitable for coatings containing other effect pigments.

In another embodiment, one or more images of the target coating can be captured with a process comprising the steps of:
i) sequentially providing directional illuminations to the target coating at two or more illumination angles and at one or more preset intensities;
ii) directing a reflection of each of said illuminations from said target coating to an imaging device to sequentially capture one or more target images of said target coating.

In yet another embodiment, one or more images of the target coating can also be captured with a fourth process comprising the steps of:
i) sequentially providing diffused illuminations to the target coating at one or more preset intensities;
ii) directing a reflection of each of said illuminations from said target coating to an imaging device to sequentially capture one or more target images of said target coating.

In a further embodiment, one or more images of the target coating can be captured with a fifth process comprising the steps of:
i) sequentially providing a combination of directional and diffused illuminations to the target coating at one or more illumination angles and at one or more preset intensities;
ii) directing a reflection of each of said illuminations from said target coating to an imaging device to sequentially capture one or more target images of said target coating.

In an even further embodiment, appearance data can be generated without capturing target images. It can be done by detecting the reflectance of the target coating and directly recording in a non-image data file such as a set binary data files, or other non-image data files that can record appearance information. Any aforementioned digital imaging devices can be configured directly or through a converter to generate non-image data file, such as a binary data file. An image recorded by an analog imaging device such as a photograph captured by a still film camera, can be converted into a digital image, or a non-image data file by, for example, a scanner.

Appearance characteristics of a number of known flakes stored in a flake database can be generated by first preparing paint panels coated with individual benchmarking coatings described in aforementioned US 6,952,265, wherein relevant sections from line 52, column 12 through line 49, column 13 of said US 6,952,265 are incorporated herein by reference, and then measuring appearance characteristics by one or more of the methods described above. It is understood that appearance characteristics of known flakes stored in the flake database need to be generated with the same as or compatible with the aforementioned imaging and measurement methods.

The appearance data of the target coating, wherein said appearance data comprise one or more appearance characteristics generated as described above, can be compared to each individual appearance characteristic stored in the flake database. Differences between the appearance data and each individual appearance characteristics stored are herein referred to as "feature distances". A simple sum, a root mean square of sum, a weighted aggregated sum, or other calculated sum of feature distances can then be generated. It is well understood by those skilled in the art that different weighing factor(s) can be given to each feature, feature value or feature distance to produce optimized color and/or appearance match. Calculation considerations, weighing factors and algorithms are described in detail in aforementioned US 6,952,265. Results of the comparisons are ranked based on selected sum of feature distances. The top ranked flake, flake combination or flake ratio can be automatically selected as the best match and then entered into well developed color matching algorithms to produce one or more matching formulas for matching both color and appearance of the target coating.

Color data of the target coating can be obtained by measuring reflectances of the target coating using a color measurement device, such as a colorimeter, a spectrophotometer, or a goniospectrophotometer. Any suitable colorimeter or spectrophotometer, such as Model SP64 manufactured by X-Rite, Grandville, Michigan can be used. Portable spectrophotometers are preferred as they can be readily positioned over coated substrate surfaces of various shapes and sizes. If desired one can measure the reflectances over several portions of the target coating to average out the reflectances of the target coating. Spectral reflectance data can be obtained using spectrophotometer. In a typical spectrophotometer, a light beam of known intensity can be directed towards the target coating and reflectance from the target coating is sequentially measured at at least one, preferably at two, even more preferably at three, aspecular angles at preset wavelengths. Alternatively, a light beam of known intensity can be sequentially directed at at least one, preferably at two, even more preferably at three, incident angles towards the target coating and reflectance from the target coating is then measured at preset wavelengths with a single detecting device so as to provide measurements at different aspecular angles, depending on the angle of illumination. A goniospectrophotometer is a spectrophotometer having the capability of measuring with a variety of illuminating and viewing angles using bidirectional geometry. A goniospectrophotometer is also known as multi-angle spectrophotometer. Any suitable Goniospectrophotometers, such as Model MA68II from X-Rite, Grandville, Michigan, or the ones provided by Murakami Color Research Laboratory, Tokyo, Japan, or by IsoColor Inc., Carlstadt, New Jersey, USA, can be used. Gonioapparent colors should be measured at multiple angles, preferably 3 to 5. For solid colors, a single aspecular angle is sufficient, typically 45 degrees. A common practice for solid colors is to illuminate at a single angle and measure the diffuse reflectance using an integrating sphere, capturing the light reflected at all angles from the target coating. The reverse method of illuminating diffusely and measuring at a single angle yields equivalent results. Diffuse reflectance is preferred when the target coating has a textured surface.

Typically, measurements are taken at 10 nm wavelength intervals from 400 nm to 700 nm wavelengths. A plot of the percent reflectance as a function of wavelength is referred to as a "spectral curve" or spectral reflectance data. For a solid color (non-flake or non-gonioapparent color, such as that lacking metallic flakes), only one spectral curve is typically sufficient to measure solid color properties. Other common geometries of measurement are diffuse illumination with 0° or 8° viewing or the reverse. If a target coating having flakes, i.e., gonioapparent color was being matched, reflectance measurements at additional angles would be necessary. ASTM E-2194 recommends three angles, 15°, 45°, and 110° as measured away from the specular reflection. DIN 6175-2 recommends up to five angles, all within this same range of angles. The X-Rite MA68II can provide measurements at 15°, 25°, 45°, 75°, and 110°. The measurement data or spectral reflectance data can be converted into L*,a*,b* or L,C,h values as described in detail in aforementioned US 2006/0181707 A1.

Color data may include spectral characteristics such as chroma, hue, lightness, darkness, and the like. Color data may further include a color code of a vehicle, a vehicle identification number (VIN) of a vehicle, a part of the VIN, or a combination thereof.

Color data of the target coating obtained as described above can be compared with color characteristics stored in a color database to select one or more colorant combinations of known colorants, wherein said colorant combinations have color characteristics matching said color data via methods well known to those who are skilled in the art. One example of such well known method is described in detail in aforementioned US 2006/0181707 A1.

Color data of a target coating can also be obtained from a color code, a vehicle identification number (VIN) of a vehicle, a part of the VIN, or a combination thereof, if the target coating is a vehicle OEM coating. Many paint suppliers, especially vehicle refinish paint suppliers, often produce match coatings that match an original coating of a vehicle (OEM coating) and the match coatings are usually associated with a color code of the OEM coating, a vehicle identification number or a part of the VIN of the vehicle. Methods for matching coating color of a vehicle based on color code or a VIN are well known. One example of using a VIN and a color code to match color of a target coating was disclosed in European patent application EP 1139234. When a color code, a VIN or a combination of a color code and a VIN is used, a number of colorant combinations can be retrieved from a coating database that have colorant combinations associated with the color code, the VIN, part of the VIN, or a combination thereof.

One of the ways of determining concentrations of colorants in the presence of flakes is provided in claim 8 and also at Column 9, line 55-column 10, line 61 and column 18, line 9-column 28, line 5 in the U.S. Pat. No. 5,231,472. Yet another model for gonioapparent colors is discussed in Kettler, W. H., Kolb, M., "Numerical evaluation of optical single-scattering properties of reflective pigments using multiple-scattering inverse transport methods", Die Farbe, Vol. 43, pg. 167 (1997) and Kettler, W. H., Kolb, M., "Inverse multiple scattering calculations for plane-parallel turbid media: application to color recipe formulation", in Proceedings of the International Workshop, Electromagnetic Light Scattering, Theory and Application, Lomonosov State University, Moscow, Edited by Y. Eremin and Th. Wriedt (1997).

It is understood by those skilled in the art that color data and appearance data of the target coating must be in compatible forms with color characteristics and appearance characteristics stored in the coating database. For example, if the color data of the target coating are L*,a*,b* data, then the color characteristics stored in the coating database must be compatible with L*,a*,b* data; and if the appearance data of the target coating are from a fixed illumination angle with multiple intensities, appearance characteristics stored in the coating database should also be of same or compatible data. It is also understood by those skilled in the art that some data forms may be converted or interchanged, such as that spectral reflectance data can be converted to L*,a*,b* data.

An example is directed to a system for automatic selection of match flakes for producing one or more matching formulas for matching color and appearance of a target coating containing flakes.

One variant of such an exemplary system comprises: **a)** a color measurement device for obtaining color data of the target coating; **b)** an appearance measurement device for obtaining appearance data of the target coating; **c)** a computing device comprising a processor and a memory member; **d)** a color database containing known colorants associated with color characteristics, wherein the color database is accessible from the computing device; **e)** a flake database containing known flakes associated with appearance characteristics, wherein the flake database is accessible from the computing device; and **f)** one or more computing program products operatively residing in the memory member that causes the computing device to perform a computing process comprising the steps of: **i)** receiving said color data and said appearance data; **ii)** comparing the appearance data to appearance characteristics of known flakes stored in the flake database; **iii)** selecting from the flake database, one or more match flakes, flake combinations or flake ratios that have appearance characteristics matching the appearance data; **iv)** selecting from the color database, one or more colorant combinations of known colorants, wherein said colorant combinations have color characteristics matching said color data; **v)** determining colorant concentrations of each known colorant of said colorant combinations and flake concentrations of each of the match flakes, flake combinations or flake ratios; **vi)** producing said one or more matching formulas according to said colorant concentrations and said flake concentrations, and optionally balancing said colorant concentrations and said flake concentrations to allow for the presence of non-colorant and non-flake components, wherein match coatings resulted from said matching formulas have color characteristics matching the color data and appearance characteristics matching the appearance data.

Another variant of such exemplary system comprises: **a)** a color measurement device for obtaining color data of the target coating; **b)** an imaging device for obtaining one or more target images of the target coating; **c)** a computing device comprising a processor and a memory member; **d)** a color database containing known colorants associated with color characteristics, wherein the color database is accessible from the computing device; **e)** a flake database containing known flakes associated with appearance characteristics, wherein the flake database is accessible from the computing device; and **f)** one or more computing program products operatively residing in the memory member that causes the computing device to perform a computing process comprising the steps of: **i)** receiving the color data and the target images; **ii)** measuring appearance characteristics of the target coating from said target images to generate appearance data; **iii)** comparing the appearance data to appearance characteristics of known flakes stored in the flake database; **iv)** selecting from the flake database, one or more match flakes, flake combinations or flake ratios that have appearance characteristics matching the appearance data; **v)** selecting from the color database, one or more colorant combinations of known colorants, wherein said colorant combinations have color characteristics matching said color data; **vi)** determining colorant concentrations of each known colorant of said colorant combinations and flake concentrations of each of the match flakes, flake combinations or flake ratios; **vii)** producing said one or more matching formulas according to said colorant concentrations and said flake concentrations, and optionally balancing said colorant concentrations and said flake concentrations to compensate for the presence of non-colorant and non-flake components, wherein match coatings resulted from said matching formulas have color characteristics matching the color data and appearance characteristics matching the appearance data.

The color measurement device, the appearance measurement device and the imaging device can further comprise means for providing illuminations, means for modulating and selecting illumination intensities, means for modulating illumination angles, or a combination thereof.

The means for providing illuminations typically include a light source, such as, the IT3900 with a tungsten-halogen lamp EKE supplied by Illumination Technologies Inc., East Syracuse, New York and a fiber optic bundle A08025.60 supplied by Schott Fostec Inc., Auburn, New York that is capable of producing beams of illumination in the visible light range of from 400 nanometers to 700 nanometers at set intensities. The system, which is preferably portable, is preferably provided with an enclosed extension to house the light source. However, applicants also contemplate using alternative means, such as the MHF-C50LR light source with an LM-50 lamp and a fiber optic bundle connected to a MML4-45D micro machine lens system, supplied by Moritex USA Inc., San Jose, California to pipe-in the illumination beams from the light source. The means for selecting an effective illumination intensity can be any conventional means, such as a voltage regulator that can change the current to the filament of the light source. The illumination intensity can be controlled in accordance with a conventional software program run from a computer to achieve the preset intensities. The computer used here to control the illumination intensity can be the same aforementioned computing device for receiving the image or a separate computer. Any suitable computer can be used, such as, for example, Dell Precision M50 model supplied by Dell Computer Corp., Round Rock, Texas. If desired, the system may comprise additional means such as a collimating lens or an aperture, for collimating the one or more beams of light emanating from light source as determined necessary by those skilled in the art. The imaging device is preferably a digital imager such as a digital still camera, a digital video camera, a digital scanner, or a charge couple device (CCD) camera.

The methods and the systems of this invention can be used for measuring appearances of original automotive coatings (OEM coatings) and for matching the OEM coatings in repair and refinish of such OEM coatings.

Color data or appearance data of a target coating can be obtained at the same portion or at different portions of the target coating. Different portions of the target coating include different portions from a same piece of a substrate coated with the target coating and from different pieces of substrates coated with the same target coating. For example, color data or appearance data can be obtained from different vehicles of the same model, same manufacturing year, and coated with the same coating. In another example, color data or appearance data can be obtained from different target panels coated with the same target coating.

Some or all of aforementioned color measurement devices and imaging devices can be modified or reconfigured by those skilled in the art to be integrated with a computing device or to have a built-in computing device unit capable of processing and recording color or appearance data without transferring color data or images to a separate computing device.

### EXAMPLES

The present invention is further defined in the following Examples. It should be understood that these Examples, while indicating preferred embodiments of the invention, are given by way of illustration only. From the above discussion and these Examples, one skilled in the art can ascertain the essential characteristics of this invention, and can make various changes and modifications of the invention to adapt it to various uses and conditions.

### Example 1

A car part from a Honda Pilot vehicle coated with Steel Blue Paint had a coating damage and was used for coating repair. The car part was a cut-off metal from the vehicle body. The paint color code for the Steel Blue Paint of the vehicle was B533M. The car part was imaged with two preset illumination intensities at a fixed illumination angle, perpendicular (0°) to the surface of the coated area to generate coating images. Each image was measured at one high and one low threshold levels to generate appearance data of the vehicle coating.

By comparing the appearance data with appearance characteristics of known flakes in benchmarking coatings stored in a flake database, a 25/75 blend of 2 aluminum flakes was selected. Among the 2 aluminum flakes, one was a coarse flake 814J and the other was a fine bright aluminum flake 819J.

Color of the vehicle was measured with a goniospectrophotometer Model MA68II, manufactured by X-Rite, Grandville, Michigan.

The color data and the selection of 25/75 blend of 2 aluminum flakes were entered into traditional automated formulation algorithm, as described by Kettler, W. H., Kolb, M., in "Inverse multiple scattering calculations for plane-parallel turbid media: application to color recipe formulation", in Proceedings of the International Workshop, Electromagnetic Light Scattering, Theory and Application, Lomonosov State University, Moscow, Edited by Y. Eremin and Th. Wriedt (1997). The following matching formula was produced automatically.

**Table 1**

| **Toners** | **Percent by Weight** |
|---|---|
| White Toner 801J ¹ | 1.04 |
| Black Toner 805J ² | 7.90 |
| Additive 4530S ³ | 1.24 |
| Red Toner 862J ⁴ | 2.84 |
| Blue Toner 827J ⁵ | 11.38 |
| Coarse aluminum flake 814J ⁶ | 1.10 |
| Fine bright aluminum 819J ⁷ | 3.32 |
| Binder 150K⁸ | 44.90 |
| Binder 175K⁸ | 26.30 |

| | |
|---|---|
| Note 1 - 8: Toners, aluminum flakes and binders are available from E.I. du Pont de Nemours and Company, Wilmington, DE, USA. | |

A coating composition was prepared based on the formula and used to repair the coating damage according to well known coating repair process.

If necessary, the formula can be adjusted based on standard color adjustment process.

### Example 2

A Honda Pilot vehicle coated with Steel Blue Paint has a coating damage and is in need for coating repair. The vehicle has a paint color code B533M. A coated area of the vehicle adjacent to the damaged coating is imaged with two preset illumination intensities at a fixed illumination angle, perpendicular (0°) to the surface of the coated area to generate coating images. Each image is measured at one high and one low threshold levels to generate appearance data of the vehicle coating.

The coating images are measured with the same process and flakes are selected to produce matching formulas as described in Example 1. The coating damage is repaired as described in Example 1.

### Comparative Example

The same car part as in Example 1 was analyzed using conventional visual effect pigment identification techniques by an experienced shader. The shader selected a 90/10 blend of 2 aluminum flakes, one being a fine bright type and the other being a medium aluminum. Color data were obtained using the same spectrophotometer. When the 90/10 blend was combined with the color data, using the same traditional automated formulation algorithm, a color formula was produced. However, a coating prepared based on the color formula did not provide acceptable appearance match.

Flake types and combinations were manually adjusted and coating compositions were prepared and tested repeatedly until acceptable match in both color and appearance were achieved.

## Claims

1. A method for producing one or more matching formulas for matching color and appearance of a target coating containing flakes, said method comprising the steps of:
a) obtaining appearance data of the target coating from an image by identifying appearance features, wherein the appearance features comprise a set of target bright features from bright areas of said image where target effect pigments exhibit highest brightness above a first threshold level T1, a set of target intermediate features from intermediate areas of the image where the target effect pigments exhibit intermediate brightness above a second threshold level T2, and a set of target dark features from dark areas of the image where the target coating is essentially free of detectable target effect pigments, and by generating individual feature values for individual appearance features, wherein the individual feature values include at least: a fractional area of an image having image intensities above a first threshold level T1, Area T1; a fractional area of each image having sparkle objects expanded at a second threshold level T2 comparing to that at the first threshold level T1, Area Exp; a fractional area of each image having new sparkle objects at the second threshold level T2, Area New; wherein appearance characteristics are generated based on the individual feature values including ratios of Area Exp / Area T1 and Area New / Area T1;
b) comparing the appearance data with appearance characteristics of known flakes stored in a flake database;
c) selecting from said flake database, one or more matched flakes, flake combinations or flake ratios that have appearance characteristics matching said appearance data;
d) obtaining color data of the target coating;
e) comparing said color data with color characteristics of one or more colorant combinations of known colorants stored in a color database to select from said color database, one or more colorant combinations that have color characteristics matching said color data;
f) determining colorant concentrations of each said known colorant of said colorant combinations and said flake concentrations of each of the match flakes, the flake combinations or the flake ratios;
g) producing said one or more matching formulas according to said colorant concentrations and said flake concentrations, wherein match coatings resulted from said matching formulas have color characteristics matching the color data and appearance characteristics matching the appearance data; and
optionally, balancing said colorant concentrations and said flake concentrations to compensate for the presence of non-colorant and non-flake components.

2. The method of claim 1, wherein the step a) comprises:
i) obtaining one or more target images of the target coating at at least one pre-set illumination intensity using an imaging device; and
ii) generating appearance data by measuring characteristics of the target coating from said target images.

3. The method of claim 2, wherein the imaging device is a digital imager.

4. The method of claim 1, wherein the step d) comprises:
i) obtaining reflectance data of the target coating using a color measuring device; and
ii) generating color data based on the reflectance data.

5. The method of claim 4, wherein the reflectance data is obtained by measuring reflectance of the target coating at one or more detection angles at a fixed illumination intensity, a fixed illumination angle and a preset illumination wavelength or by measuring reflectance of the target coating at a fixed detection angle at one or more illumination intensities, at one or more illumination angles, and at one or more illumination wavelengths.

6. The method of claim 1, wherein the color data comprise L*,a*,b* or L,C,h values or spectral reflectance data or a color identification code selected from a color code of a vehicle, a vehicle identification number (VIN) of the vehicle, a portion of the VIN, or a combination thereof.

7. The method of claim 1, wherein the flakes are gonioapparent flakes.

8. The method of claim 1, wherein the target coating is affixed to surface of an automotive body.

9. A system for producing one or more matching formulas for matching color and appearance of a target coating containing flakes, said system comprising:
a) a color measurement device for obtaining color data of the target coating;
b) an appearance measurement device for obtaining appearance data of the target coating from an image by identifying appearance features, wherein the appearance features comprise a set of target bright features from bright areas of said image where target effect pigments exhibit highest brightness above a first threshold level T1, a set of target intermediate features from intermediate areas of the image where the target effect pigments exhibit intermediate brightness above a second threshold level T2, and a set of target dark features from dark areas of the image where the target coating is essentially free of detectable target effect pigments, and by generating individual feature values for individual appearance features, wherein the individual feature values include at least: a fractional area of an image having image intensities above a first threshold level T1, Area T1; a fractional area of each image having sparkle objects expanded at a second threshold level T2 comparing to that at the first threshold level T1, Area Exp; a fractional area of each image having new sparkle objects at the second threshold level T2, Area New; wherein appearance characteristics are generated based on the individual feature values including ratios of Area Exp / Area T1 and Area New / Area T1;
c) a computing device comprising a processor and a memory member;
d) a color database containing known colorants associated with color characteristics, wherein the color database is accessible from the computing device;
e) a flake database containing known flakes associated with appearance characteristics, wherein the flake database is accessible from the computing device; and
f) one or more computing program products operatively residing in the memory member that causes the computing device to perform a computing process comprising the steps of:
i. receiving said color data and said appearance data;
ii. comparing the appearance data to appearance characteristics of known flakes stored in the flake database;
iii. selecting from the flake database, one or more match flakes, flake combinations or flake ratios that have appearance characteristics matching the appearance data;
iv. selecting from the color database, one or more colorant combinations of known colorants, wherein said colorant combinations have color characteristics matching said color data;
v. determining colorant concentrations of each known colorant of said colorant combinations and flake concentrations of each of the match flakes, flake combinations or flake ratios;
vi. producing said one or more matching formulas according to said colorant concentrations and said flake concentrations, wherein match coatings resulted from said matching formulas have color characteristics matching the color data and appearance characteristics matching the appearance data; and
optionally, balancing said colorant concentrations and said flake concentrations to compensate for the presence of non-colorant and non-flake components.

10. The system of claim 9, wherein the appearance measurement device comprises an imaging device for obtaining one or more target images of the target coating for generating appearance data;
wherein receiving appearance data in step i) comprises receiving the target images; and
measuring appearance characteristics of the target coating from said target images to generate appearance data.

11. The system of claim 9 or 10, wherein the color measurement device is a colorimeter, spectrophotometer, or a goniospectrophotometer.

12. The system of claim 9 or 10, wherein the color data comprise L*,a*,b* or L,C,h values or spectral reflectance data or a color identification code selected from a color code of a vehicle, a vehicle identification number (VIN) of the vehicle, a part of the VIN, or a combination thereof.

13. The system of claim 9 or 10, wherein the flakes are gonioapparent flakes.

14. The system of claim 9 or 10, wherein the target coating is affixed to surface of an automotive body.

15. The system of claim 10, wherein the imaging device is a digital imager.

16. The system of claim 10, wherein the imaging device comprises means for modulating illumination intensities or means for modulating illumination angles.

17. The system of claim 10, wherein the color measurement device comprises means for modulating illumination angles or means for modulating illumination intensities.

18. The system of claim 10 further comprising a third database for further storing and retrieving said appearance data, wherein the third
database is accessible from the computing device.

19. The system of claim 10, wherein the color measurement device is operatively coupled to the computing device via wired or wireless connections or wherein the imaging device is operatively coupled to the computing device via wired or wireless connections.

20. The system of claim 10, wherein the color measurement device and the imaging device are configured in one housing unit or wherein the color measurement device and the imaging device are configured in separate housing units.

21. The system of claim 10, wherein the computing device is a portable computing device.

22. The system of claim 21, wherein the portable computing device is operatively coupled to the color measurement device or the imaging device via wireless connections.

23. The system of any one of claims 10 to 22, wherein the color measurement device and the imaging device are configured to obtain said color data and said target images from a same portion of the target coating simultaneously or sequentially or wherein the color measurement device and the imaging device are configured to obtain said color data and said target images from different portions of the target coating simultaneously or sequentially.

## Patentansprüche

1. Verfahren zum Herstellen einer oder mehrerer übereinstimmender Formeln zur Angleichung von Farbe und Erscheinung einer Flocken enthaltenden Zielbeschichtung, das Verfahren umfassend die Schritte:
a) Erlangen von Erscheinungsdaten der Zielbeschichtung aus einem Bild durch Identifizieren von Erscheinungsmerkmalen, wobei die Erscheinungsmerkmale einen Satz von hellen Zielmerkmalen aus hellen Bereichen des Bilds, in welchen Zieleffektpigmente die höchste Helligkeit über einem ersten Schwellenwert T1 zeigen, einen Satz von mittleren Zielmerkmalen aus mittleren Bereichen des Bilds, in welchen die Zieleffektpigmente mittlere Helligkeit über einem zweiten Schwellenwert T2 zeigen, und einen Satz von dunklen Zielmerkmalen aus dunklen Bereichen des Bilds, in welchen die Zielbeschichtung im Wesentlichen frei von nachweisbaren Zieleffektpigmenten ist, umfassen, und durch Erzeugen einzelner Merkmalswerte für einzelne Erscheinungsmerkmale, wobei die einzelnen Merkmalswerte mindestens aufweisen: einen Teilbereich eines Bilds aufweisend Bildintensitäten über einem ersten Schwellenwert T1, Bereich T1; einen Teilbereich jedes Bilds aufweisend funkelnde Objekte erweitert an einem zweiten Schwellenwert T2 im Vergleich zu jenem am ersten Schwellenwert T1, Bereich Exp; einen Teilbereich jedes Bilds aufweisend neue funkelnde Objekte am zweiten Schwellenwert T2, Bereich Neu; wobei Erscheinungsmerkmale basierend auf den einzelnen Merkmalswerten aufweisend die Verhältnisse von Bereich Exp / Bereich T1 und Bereich Neu / Bereich T1 erzeugt werden;
b) Vergleichen der Erscheinungsdaten mit den Erscheinungseigenschaften bekannter Flocken, die in einer Flockendatenbank gespeichert sind;
c) Auswählen, aus der Flockendatenbank, einer oder mehrerer übereinstimmenden Flocken, Flockenkombinationen oder Flockenverhältnisse, die Erscheinungseigenschaften, die mit den Erscheinungsdaten übereinstimmen, aufweisen;
d) Erlangen von Farbdaten der Zielbeschichtung;
e) Vergleichen der Farbdaten mit Farbeigenschaften einer oder mehrere Farbstoffkombinationen bekannter Farbstoffe, die in einer Farbdatenbank gespeichert sind, um aus dieser Farbdatenbank eine oder mehrere Farbkombinationen auszuwählen, welche Farbeigenschaften, die mit den Farbdaten übereinstimmen, aufweisen;
f) Bestimmen der Farbstoffkonzentrationen jedes bekannten Farbstoffs der Farbstoffkombinationen, und der Flockenkonzentrationen jeder der übereinstimmenden Flocken, der Flockenkombinationen oder der Flockenverhältnisse;
g) Herstellen der einen oder mehreren übereinstimmenden Formeln gemäß der Farbstoffkonzentrationen und Flockenkonzentrationen, wobei übereinstimmende Beschichtungen basierend auf den übereinstimmenden Formeln, Farbeigenschaften, welche mit den Farbdaten übereinstimmen, und Erscheinungseigenschaften, welche mit den Erscheinungsdaten übereinstimmen, aufweisen, und
wahlweise Ausgleichen der Farbstoffkonzentrationen und der Flockenkonzentrationen zum Kompensieren des Vorhandenseins von Nichtfarbstoff- und Nichtflocken-Bestandteilen.

2. Verfahren nach Anspruch 1, wobei der Schritt a) umfasst:
i) Erlangen eines oder mehreren Zielbilder der Zielbeschichtung bei mindestens einer vorgegebenen Beleuchtungsintensität unter Verwendung einer Bilderzeugungsvorrichtung; und
ii) Erzeugen von Erscheinungsdaten durch Messen der Eigenschaften der Zielbeschichtung aus den Zielbildern.

3. Verfahren nach Anspruch 2, wobei die Bilderzeugungsvorrichtung ein digitaler Bildgeber ist.

4. Verfahren nach Anspruch 1, wobei der Schritt d) umfasst:
i) Erlangen von Reflexionsdaten der Zielbeschichtung unter Verwendung einer Farbmessvorrichtung; und
ii) Erzeugen von Farbdaten basierend auf den Reflexionsdaten.

5. Verfahren nach Anspruch 4, wobei die Reflexionsdaten erlangt werden durch Messen des Reflexionsvermögens der Zielbeschichtung aus einem oder mehreren Erfassungswinkeln bei einer gegebenen Beleuchtungsintensität, einem gegebenen Beleuchtungswinkel und einer vorgegebenen Beleuchtungswellenlänge, oder durch Messen des Reflexionsvermögens der Zielbeschichtung aus einem gegebenen Erfassungswinkel bei einer oder mehreren Beleuchtungsintensitäten, einem oder mehreren Beleuchtungswinkeln und einer oder mehreren Beleuchtungsintensitäten.

6. Verfahren nach Anspruch 1, wobei die Farbdaten die Werte L*, a*, b* oder L, C, h oder spektrale Reflexionsdaten oder einen Farbidentifikationscode ausgewählt aus einem Farbcode eines Fahrzeugs, einer Fahrzeugidentifikationsnummer (VIN) des Fahrzeugs, einem Abschnitt der VIN oder einer Kombination daraus umfassen.

7. Verfahren nach Anspruch 1, wobei die Flocken gonioapparente Flocken sind.

8. Verfahren nach Anspruch 1, wobei die Zielbeschichtung auf der Oberfläche einer Kraftfahrzeugkarosserie aufgebracht ist.

9. System zum Herstellen einer oder mehrerer übereinstimmender Formeln zur Angleichung von Farbe und Erscheinung einer Flocken enthaltenden Zielbeschichtung, das System umfassend:
a) eine Farbmessvorrichtung zum Erlangen von Farbdaten der Zielbeschichtung;
b) eine Erscheinungsmessvorrichtung zum Erlangen von Erscheinungsdaten der Zielbeschichtung aus einem Bild durch Identifizieren von Erscheinungsmerkmalen, wobei die Erscheinungsmerkmale einen Satz von hellen Zielmerkmalen aus hellen Bereichen des Bilds, in welchen Zieleffektpigmente die höchste Helligkeit über einem ersten Schwellenwert T1 zeigen, einen Satz von mittleren Zielmerkmalen aus mittleren Bereichen des Bilds, in welchen die Zieleffektpigmente mittlere Helligkeit über einem zweiten Schwellenwert T2 zeigen, und einen Satz von dunklen Zielmerkmalen aus dunklen Bereichen des Bilds, in welchen die Zielbeschichtung im Wesentlichen frei von nachweisbaren Zieleffektpigmenten ist, umfassen, und durch Erzeugen einzelner Merkmalswerte für einzelne Erscheinungsmerkmale, wobei die einzelnen Merkmalswerte mindestens aufweisen: einen Teilbereich eines Bilds aufweisend Bildintensitäten über einem ersten Schwellenwert T1, Bereich T1; einen Teilbereich jedes Bilds aufweisend funkelnde Objekte erweitert an einem zweiten Schwellenwert T2 im Vergleich zu jenem am ersten Schwellenwert T1, Bereich Exp; einen Teilbereich jedes Bilds aufweisend neue funkelnde Objekte am zweiten Schwellenwert T2, Bereich Neu; wobei Erscheinungseigenschaften basierend auf den einzelnen Merkmalswerten aufweisend die Verhältnisse von Bereich Exp / Bereich T1 und Bereich Neu / Bereich T1 erzeugt werden;
c) eine Datenverarbeitungsvorrichtung umfassend einen Prozessor und ein Speicherelement;
d) eine Farbdatenbank, die bekannte Farbstoffe in Zusammenhang mit Farbeigenschaften enthält, wobei von der Datenverarbeitungsvorrichtung aus auf die Farbdatenbank zugegriffen werden kann;
e) eine Flockendatenbank, die bekannte Flocken in Zusammenhang mit Erscheinungseigenschaften enthält, wobei von der Datenverarbeitungsvorrichtung aus auf die Flockendatenbank zugegriffen werden kann; und
f) ein oder mehrere Computerprogrammprodukte, die wirkend im Speicherelement vorhanden sind, welche bewirken, dass die Datenverarbeitungsvorrichtung einen Berechnungsvorgang ausführt, der Vorgang umfassend die Schritte:
i. Empfangen der Farbdaten und der Erscheinungsdaten;
ii. Vergleichen der Erscheinungsdaten mit Erscheinungseigenschaften bekannter Flocken, die in der Flockendatenbank gespeichert sind;
iii. Auswählen, aus der Flockendatenbank, einer oder mehrerer übereinstimmender Flocken, Flockenkombinationen oder Flockenverhältnisse, welche Erscheinungseigenschaften, die mit den Erscheinungsdaten übereinstimmen, aufweisen;
iv. Auswählen, aus der Farbdatenbank, einer oder mehrerer Farbstoffkombinationen bekannter Farbstoffe, wobei die Farbstoffkombinationen Farbeigenschaften, die mit den Farbdaten übereinstimmen, aufweisen;
v. Bestimmen von Farbstoffkonzentrationen jedes bekannten Farbstoffs der Farbstoffkombinationen, und von Flockenkonzentrationen jeder der übereinstimmenden Flocken, Flockenkombinationen oder Flockenverhältnisse;
vi. Herstellen der einen oder mehreren übereinstimmenden Formeln gemäß der Farbstoffkonzentrationen und Flockenkonzentrationen, wobei übereinstimmende Beschichtungen basierend auf den übereinstimmenden Formeln, Farbeigenschaften, welche mit den Farbdaten übereinstimmen, und Erscheinungseigenschaften, welche mit den Erscheinungsdaten übereinstimmen, aufweisen, und
wahlweise Ausgleichen der Farbstoffkonzentrationen und der Flockenkonzentrationen zum Kompensieren des Vorhandenseins von Nichtfarbstoff- und Nichtflocken-Bestandteilen.

10. System nach Anspruch 9, wobei die Erscheinungsmessvorrichtung eine Bilderzeugungsvorrichtung zum Erlangen eines oder mehreren Zielbilder der Zielbeschichtung zum Erzeugen von Erscheinungsdaten umfasst;
wobei das Empfangen von Erscheinungsdaten in Schritt i) das Empfangen der Zielbilder umfasst; und
Messen von Erscheinungseigenschaften der Zielbeschichtung aus den Zielbildern zum Erzeugen von Erscheinungsdaten.

11. System nach Anspruch 9 oder 10, wobei die Farbmessvorrichtung ein Kolorimeter, ein Spektralphotometer oder ein Goniospektralphotometer ist.

12. System nach Anspruch 9 oder 10, wobei die Farbdaten die Werte L*, a*, b* oder L, C, h oder spektrale Reflexionsdaten oder einen Farbidentifikationskode ausgewählt aus einem Farbcode eines Fahrzeugs, einer Fahrzeugidentifikationsnummer (VIN) des Fahrzeugs, einem Abschnitt der VIN oder einer Kombination daraus umfassen.

13. System nach Anspruch 9 oder 10, wobei die Flocken gonioapparente Flocken sind.

14. System nach Anspruch 9 oder 10, wobei die Zielbeschichtung auf der Oberfläche einer Kraftfahrzeugkarosserie aufgebracht ist.

15. System nach Anspruch 10, wobei die Bilderzeugungsvorrichtung ein digitaler Bildgeber ist.

16. System nach Anspruch 10, wobei die Bilderzeugungsvorrichtung Mittel zum Modulieren von Beleuchtungsintensitäten oder Mittel zum Modulieren von Beleuchtungswinkeln umfasst.

17. System nach Anspruch 10, wobei die Farbmessvorrichtung Mittel zum Modulieren von Beleuchtungswinkeln oder Mittel zum Modulieren von Beleuchtungsintensitäten umfasst.

18. System nach Anspruch 10, ferner umfassend eine dritte Datenbank zum weiteren Speichern und Abrufen der Erscheinungsdaten, wobei die die Datenverarbeitungsvorrichtung auf die dritte Datenbank zugreifen kann.

19. System nach Anspruch 10, wobei die Farbmessvorrichtung über verkabelte oder kabellose Verbindungen wirkend mit der Datenverarbeitungsvorrichtung verbunden ist, oder wobei die Bilderzeugungsvorrichtung über verkabelte oder kabellose Verbindungen wirkend mit der Datenverarbeitungsvorrichtung verbunden ist.

20. System nach Anspruch 10, wobei die Farbmessvorrichtung und die Bilderzeugungsvorrichtung in einer Gehäuseeinheit ausgebildet sind, oder wobei die Farbmessvorrichtung und die Bilderzeugungsvorrichtung in getrennten Gehäuseeinheiten ausgebildet sind.

21. System nach Anspruch 10, wobei die Datenverarbeitungsvorrichtung eine tragbare Datenverarbeitungsvorrichtung ist.

22. System nach Anspruch 21, wobei die tragbare Datenverarbeitungsvorrichtung über kabellose Verbindungen wirkend mit der Farbmessvorrichtung oder der Bilderzeugungsvorrichtung verbunden ist.

23. System nach einem der Ansprüche 10 bis 22, wobei die Farbmessvorrichtung und die Bilderzeugungsvorrichtung dafür ausgebildet sind, die Farbdaten und die Zielbilder gleichzeitig oder nacheinander vom selben Abschnitt der Zielbeschichtung zu erlangen, oder wobei die Farbmessvorrichtung und die Bilderzeugungsvorrichtung dafür ausgebildet sind, die Farbdaten und die Zielbilder gleichzeitig oder nacheinander von verschiedenen Abschnitten der Zielbeschichtung zu erlangen.

## Revendications

1. Procédé de production d'une de plusieurs formules de correspondance destinées à faire correspondre couleur et apparence d'un revêtement cible contenant des flocons, ledit procédé comprenant les étapes consistant à :
a) obtenir des données d'apparence du revêtement cible à partir d'une image en identifiant des éléments d'apparence, dans lequel les éléments d'apparence comprennent un ensemble d'éléments clairs cibles provenant de zones claires de ladite image où des pigments d'effet cibles présentent la brillance la plus élevée au-dessus d'un premier niveau de seuil T1, un ensemble d'éléments intermédiaires cibles provenant de zones intermédiaires de l'image où les pigments d'effet cibles présentent une brillance intermédiaire au-dessus d'un second niveau de seuil T2, et un ensemble d'éléments sombres cibles provenant de zones sombres de l'image où le revêtement cible est sensiblement exempt de pigments d'effet cibles pouvant être détectés, et en produisant des valeurs individuelles d'élément pour des éléments individuels d'apparence, dans lequel les valeurs individuelles d'élément comprennent au moins : une zone fractionnelle d'une image présentant des intensités d'image au-dessus d'un premier niveau de seuil T1, une Zone T1 ; une zone fractionnelle de chaque image comportant des objets étincelants étendus à un second niveau de seuil T2 par rapport au premier niveau de seuil T1, une zone Exp ; une zone fractionnelle de chaque image comportant de nouveaux objets étincelants au second niveau de seuil T2, une Nouvelle Zone ; dans lequel les caractéristiques d'apparence sont produites en fonction des valeurs individuelles d'élément comprenant les rapports Zone Exp / Zone T1 et Nouvelle Zone / Zone T1 ;
b) comparer les données d'apparence avec les caractéristiques d'apparence de flocons connus stockés dans la base de données de flocons ;
c) choisir depuis ladite base de données de flocons, un ou plusieurs flocons correspondants, des combinaisons de flocons ou des rapports de flocons qui présentent des caractéristiques d'apparence correspondant auxdites données d'apparence ;
d) obtenir des données de couleur du revêtement cible ;
e) comparer lesdites données de couleur avec les caractéristiques de couleur d'une ou de plusieurs combinaisons de colorants provenant de colorants connus stockés dans une base de données de couleurs afin de choisir dans ladite base de données de couleurs, une ou plusieurs combinaisons de colorants qui présentent des caractéristiques de couleur correspondant auxdites données de couleur ;
f) déterminer les concentrations de colorants de chacun desdits colorants connus desdites combinaisons de colorants et desdites concentrations de flocons de chacun des flocons de correspondance, les combinaisons de flocons ou les rapports de flocons ;
g) produire lesdites au moins une formule de correspondance conformément auxdites concentrations de colorants et auxdites concentrations de flocons, dans lequel les revêtements de correspondance découlant desdites formules de correspondance présentent des caractéristiques de couleur correspondant aux données de couleur et des caractéristiques d'apparence correspondant aux données d'apparence ; et
éventuellement, équilibrer lesdites concentrations de colorants et lesdites concentrations de flocons afin de compenser la présence de composants de non colorants et de non flocons.

2. Procédé selon la revendication 1, dans lequel l'étape a) comprend :
i) l'obtention d'une de plusieurs images cibles du revêtement cible à au moins une intensité d'éclairage préétablie en utilisant un dispositif d'imagerie ; et
ii) la production de données d'apparence en mesurant les caractéristiques du revêtement cible provenant desdites images cibles.

3. Procédé selon la revendication 2, dans lequel le dispositif d'imagerie est un imageur digital.

4. Procédé selon la revendication 1, dans lequel l'étape d) comprend :
i) l'obtention de données de réflectance du revêtement cible en utilisant un dispositif mesurant les couleurs ; et
ii) la production de données de couleur en fonction des données de réflectance.

5. Procédé selon la revendication 4, dans lequel les données de réflectance sont obtenues en mesurant la réflectance du revêtement cible au niveau d'un ou de plusieurs angles de détection à une intensité d'éclairage fixe, à un angle d'éclairage fixe et à une longueur d'onde d'éclairage préétablie ou en mesurant la réflectance du revêtement cible au niveau d'un angle de détection fixe à une ou plusieurs intensités d'éclairage, au niveau d'un ou de plusieurs angles d'éclairage et au niveau d'une ou de plusieurs longueurs d'onde éclairage.

6. Procédé selon la revendication 1, dans lequel les données de couleur comprennent les valeurs L*, a*, b* ou L, C, h ou les données de réflectance spectrale ou un code d'identification de couleur choisi parmi un code de couleur d'un véhicule, un nombre d'identifications de véhicule (VIN) du véhicule, une partie du VIN ou une combinaison de ceux-ci.

7. Procédé selon la revendication 1, dans lequel les flocons sont des flocons gonioapparents.

8. Procédé selon la revendication 1, dans lequel le revêtement cible est fixé à une surface d'une carrosserie d'automobile.

9. Système de production d'une ou de plusieurs formules de correspondance destinées à faire correspondre couleur et apparence d'un revêtement cible contenant des flocons, ledit système comprenant :
a) un dispositif de mesure de couleur permettant d'obtenir des données de couleur du revêtement cible ;
b) un dispositif de mesure d'apparence permettant d'obtenir des données d'apparence du revêtement cible à partir d'une image en identifiant des éléments d'apparence, dans lequel les éléments d'apparence comprennent un ensemble d'éléments clairs cibles provenant de zones claires de ladite image où des pigments d'effet cibles présentent la brillance la plus élevée au-dessus d'un premier niveau de seuil T1, un ensemble d'éléments intermédiaires cibles provenant de zones intermédiaires de l'image où les pigments d'effet cibles présentent une brillance intermédiaire au-dessus d'un second niveau de seuil T2, et un ensemble d'éléments sombres cibles provenant de zones sombres de l'image où le revêtement cible est sensiblement exempt de pigments d'effet cibles pouvant être détectés, et en produisant des valeurs individuelles d'élément pour des éléments individuels d'apparence, dans lequel les valeurs individuelles d'élément comprennent au moins : une zone fractionnelle d'une image présentant des intensités d'image au-dessus d'un premier niveau de seuil T1, une Zone T1 ; une zone fractionnelle de chaque image comportant des objets étincelants étendus à un second niveau de seuil T2 par rapport au premier niveau de seuil T1, une zone Exp ; une zone fractionnelle de chaque image comportant de nouveaux objets étincelants au second niveau de seuil T2, une Nouvelle Zone ; dans lequel les caractéristiques d'apparence sont produites en fonction des valeurs individuelles d'élément comprenant les rapports Zone Exp / Zone T1 et Nouvelle Zone / Zone T1 ;
c) un dispositif informatique comprenant un processeur et un élément à mémoire ;
d) une base de données de couleurs contenant des colorants connus associés aux caractéristiques de couleur, dans lequel la base de données de couleurs est accessible à partir du dispositif informatique ;
e) une base de données de flocons contenant des flocons connus associés aux caractéristiques d'apparence, dans lequel la base de données de flocons est accessible à partir du dispositif informatique ; et
f) au moins un produit de programme informatique résidant de manière fonctionnelle dans l'élément à mémoire et amenant le dispositif informatique à réaliser un processus de traitement comprenant les étapes à :
i. recevoir lesdites données de couleur et lesdites données d'apparence ;
ii. comparer les données d'apparence avec les caractéristiques d'apparence de flocons connus stockés dans la base de données de flocons ;
iii. choisir depuis la base de données de flocons, un ou plusieurs flocons de correspondance, des combinaisons de flocons ou des rapports de flocons qui présentent des caractéristiques d'apparence correspondant aux données d'apparence ;
iv. choisir à partir de la base de données de couleurs, au moins une combinaison de colorants provenant de colorants connus, dans lequel lesdites combinaisons de colorants présentent des caractéristiques de couleur correspondant auxdites données de couleur ;
v. déterminer des concentrations de colorant de chaque colorant connu desdites combinaisons de colorants et desdites concentrations de flocons de chacun des flocons de correspondance, des combinaisons de flocons ou des rapports de flocons ;
vi. produire lesdites une ou plusieurs formules de correspondance conformément auxdites concentrations de colorants et auxdites concentrations de flocons, dans lequel des revêtements de correspondance découlant desdites formules de correspondance présentent des caractéristiques de couleur correspondant aux données de couleur et des caractéristiques d'apparence correspondant aux données d'apparence ; et
éventuellement, équilibrer lesdites concentrations de colorants et lesdites concentrations de flocons afin de compenser la présence de composants de non colorants et de non flocons

10. Système selon la revendication 9, dans lequel le dispositif de mesure d'apparence comprend un dispositif d'imagerie permettant d'obtenir une ou plusieurs images cibles du revêtement cible permettant la production de données d'apparence ;
dans lequel la réception de données d'apparence dans l'étape i) comprend la réception des images cibles ; et
la mesure des caractéristiques d'apparence du revêtement cible à partir desdites images cibles afin de produire des données d'apparence.

11. Système selon la revendication 9 ou la revendication 10, dans lequel le dispositif de mesure de la couleur est un colorimètre, un spectrophotomètre ou un goniospectrophotomètre.

12. Système selon la revendication 9 ou la revendication 10, dans lequel les données de couleur comprennent les valeurs L*, a*, b* ou L, C, h ou les données de réflectance spectrale ou un code d'identification de couleur choisi parmi un code de couleur d'un véhicule, un nombre d'identifications de véhicule (VIN) du véhicule, une partie du VIN ou une combinaison de ceux-ci.

13. Système selon la revendication 9 ou la revendication 10, dans lequel les flocons sont des flocons gonioapparents.

14. Système selon la revendication 9 ou la revendication 10, dans lequel le revêtement cible est fixé à une surface d'une carrosserie d'automobile.

15. Système selon la revendication 10, dans lequel le dispositif d'imagerie est un imageur digital.

16. Système selon la revendication 10, dans lequel le dispositif d'imagerie comprend un moyen permettant de moduler les intensités d'éclairage ou un moyen permettant de moduler les angles d'éclairage.

17. Système selon la revendication 10, dans lequel le dispositif de mesure de couleur comprend un moyen permettant de moduler les angles d'éclairage ou un moyen permettant de moduler les intensités d'éclairage.

18. Système selon la revendication 10, comprenant en outre une troisième base de données permettant en outre de stocker et de récupérer lesdites données d'apparence, dans lequel la troisième base de données est accessible à partir du dispositif informatique.

19. Système selon la revendication 10, dans lequel le dispositif de mesure de couleur est connecté de manière fonctionnelle au dispositif informatique par l'intermédiaire de connexions filaires ou sans fil, ou dans lequel le dispositif d'imagerie est connecté de manière fonctionnelle au dispositif informatique par l'intermédiaire de connexions filaires ou sans fil.

20. Système selon la revendication 10, dans lequel le dispositif de mesure de couleur et le dispositif d'imagerie sont conçus dans une unité de boîtier, ou dans lequel le dispositif de mesure de couleur et le dispositif d'imagerie sont conçus dans des unités de boîtier séparées.

21. Système selon la revendication 10, dans lequel le dispositif informatique est un dispositif informatique portable.

22. Système selon la revendication 21, dans lequel le dispositif informatique portable est connecté de manière fonctionnelle au dispositif de mesure de couleur ou au dispositif d'imagerie par l'intermédiaire de connexions sans fil.

23. Système selon l'une quelconque des revendications 10 à 22, dans lequel le dispositif de mesure de couleur et le dispositif d'imagerie sont conçus afin d'obtenir lesdites données de couleur et lesdites images cibles à partir d'une même partie du revêtement cible de manière simultanée ou séquentielle, ou dans lequel le dispositif de mesure de couleur et le dispositif d'imagerie sont conçus afin d'obtenir lesdites données de couleur et lesdites images cibles à partir de parties différentes du revêtement cible de manière simultanée ou séquentielle.
